# FASCICULE DE BREVET EUROPEEN

(11) **EP 2 895 710 B1**
(45) Date de publication et mention de la délivrance du brevet: **09.11.2016**
(21) Numéro de dépôt: 13774739.0
(22) Date de dépôt: 11.09.2013
(51) Int. Cl.: F01L 1/344, F02D 41/22

(54) **PROCEDE DE DETECTION D'UNE DEFAILLANCE D'UN DISPOSITIF DE DECALAGE D'UN ARBRE A CAMES**
VERFAHREN ZUR ERFASSUNG EINER FEHLFUNKTION EINER NOCKENWELLENVERSTELLEINRICHTUNG
METHOD OF DETECTION OF A MALFUNTION OF A CAMSHAFT PHASING DEVICE

(30) Priorité: 12.09.2012 FR 1258575
(43) Date de publication de la demande: 22.07.2015
(73) Titulaire: Renault S.A.S., 92100 Boulogne-Billancourt (FR)
(72) Inventeur: THOUVENEL, Nicolas, 91610 Ballancourt Sur Essonne (FR); MILLAN, Julien, 91460 Marcoussis (FR)
(86) Numéro de dépôt international: PCT/FR2013/052088
(87) Numéro de publication internationale: WO 2014/041299

(56) Documents cités:
- EP-A2- 1 312 773
- US-A1- 2002 179 027
- US-A1- 2006 106 527
- US-A1- 2008 011 256
- US-A1- 2008 283 007

## Description

L'invention a pour objet un procédé de détection d'une défaillance d'un dispositif de décalage d'un arbre à cames.

Un tel dispositif de décalage correspond à ce qui est plus généralement connu sous l'appellation VVT (de l'anglais Variable Valve Timing).

Jusqu'à aujourd'hui, seules des défaillances importantes d'un dispositif de décalage d'arbre à cames, comme par exemple un blocage en position refuge ou en position maximale, sont détectées. A ce sujet, la demande de brevet US20080011256 décrit un système de contrôle moteur permettant de détecter une défaillance du dispositif de décalage, en comparant dans le temps, deux positions angulaires de l'arbre à cames en position refuge. Si la différence entre ces deux positions atteint ou dépasse une valeur seuil, le dispositif de décalage est considéré comme déficient.

Avec l'évolution des réglementations de dépollution, il devient indispensable de pouvoir détecter des défaillances plus fines d'un système de décalage d'arbre à cames, comme par exemple, un temps de réponse trop long entre la consigne à appliquer et la mesure effective du dispositif de décalage.

Or, les méthodes actuellement disponibles ne permettent pas de détecter de telles défaillances, avec une précision et une fiabilité suffisantes pour une application industrielle.

Par exemple, on connaît de la publication US-A1-2006 106527 un procédé de détection d'une défaillance d'un dispositif de décalage d'arbre à cames d'un moteur de véhicule, comprenant : une étape de vérification des conditions standards de fonctionnement du moteur ; une étape d'identification d'une zone de diagnostic correspondant à une phase de transitoire important sur une période donnée ; et, une étape de détection d'une défaillance du dispositif de décalage dans ladite zone de diagnostic, ladite étape se fondant sur une comparaison entre la somme des différences entre la consigne de position angulaire du dispositif de décalage et la mesure de la position angulaire dudit dispositif de décalage pendant ladite période, avec une valeur seuil prédéterminée.

Les procédés selon l'invention sont conçus pour détecter, avec rigueur et précision, une défaillance de positionnement d'un système de décalage d'arbre à cames par rapport à une consigne donnée, pour répondre aux exigences des nouvelles réglementations en matière de dépollution.

L'invention a pour objet un procédé de détection d'une défaillance d'un dispositif de décalage d'arbre à cames d'un moteur de véhicule, caractérisé en ce qu'il comprend les étapes suivantes,
- Une étape de vérification des conditions standards de fonctionnement du moteur,
- Une étape d'identification d'une zone de diagnostic correspondant à une phase de transitoire important sur une période donnée, ladite étape se fondant sur la différence entre la consigne de position angulaire du dispositif de décalage et un filtre numérique passe bas d'ordre 1 de cette consigne, et sur une comparaison d'une caractéristique de ladite phase avec une valeur seuil prédéfinie,
- Une étape de détection d'une défaillance du dispositif de décalage dans ladite zone de diagnostic, ladite étape se fondant sur une comparaison entre la somme des différences entre la consigne de position angulaire du dispositif de décalage et la mesure de la position angulaire dudit dispositif de décalage pendant ladite période, avec une valeur seuil prédéterminée.

Le principe de ce procédé se fonde essentiellement sur deux étapes : une première étape consistant à sélectionner, parmi toutes les phases de transitoire important, celles qui présentent les conditions requises, pouvant constituer une zone de diagnostic servant de base à une deuxième étape de détection d'une défaillance du dispositif de décalage. En effet, il est nécessaire que les phases de transitoire élevé s'effectuent avec une variation angulaire importante du dispositif de décalage, et sur une durée significative, pour pouvoir éventuellement être sélectionnées afin de détecter une défaillance du dispositif de décalage angulaire. La première étape repose sur la différence entre la consigne de position angulaire du dispositif de décalage et le filtre passe bas d'ordre 1 de cette consigne, et la deuxième étape repose sur la différence entre ladite consigne et la mesure de la position angulaire réelle dudit dispositif de décalage. Le filtre passe bas d'ordre 1 permet de lisser le bruit du signal correspondant à la consigne. Il est important de vérifier initialement que le moteur fonctionne dans un environnement normal, sans être perturbé par des conditions extrêmes, susceptibles de biaiser le diagnostic final de défaillance du dispositif de décalage.

Avantageusement, l'étape d'identification comprend les étapes suivantes :
- Une étape de calcul de la différence entre la consigne de position angulaire du dispositif de décalage et le filtre numérique passe bas d'ordre 1,
- Une étape d'intégration de cette différence sur la période donnée,
- Une étape de comparaison entre la valeur de l'intégrale calculée et une valeur seuil prédéterminée.

La caractéristique de la phase de transitoire élevé qui va être comparée à la valeur seuil prédéfinie, est l'intégrale de la différence entre la consigne de la position angulaire du dispositif de décalage et le filtre numérique passe bas d'ordre 1 de ladite consigne, sur la période donnée. A titre d'exemple, une phase de transitoire élevé peut constituer une zone de diagnostic, si l'écart de position angulaire est supérieur à 20° sur une période comprise entre 5s et 10s.

De façon préférentielle, une zone de diagnostic est sélectionnée pour procéder à l'étape de détection, si la valeur de l'intégrale calculée est supérieure ou égale à la valeur seuil prédéfinie. En effet, parmi toutes les phases de transitoire élevé identifiées, seules celles pour lesquelles la valeur de l'intégrale est supérieure à la valeur seuil vont constituer une zone de diagnostic, sur la base de laquelle va s'effectuer l'étape de détection de la défaillance du dispositif de décalage.

De façon avantageuse, la position angulaire du dispositif de décalage est exprimée en angle vilebrequin.

Préférentiellement, un transitoire important de position angulaire correspond à un écart angulaire de l'angle vilebrequin compris entre 20° et 40°.

Avantageusement, la période donnée correspondant à une phase de transitoire élevé est comprise entre 5s et 10s.

De façon préférentielle, l'étape de détection de la défaillance s'effectue en calculant la différence entre la consigne de position angulaire du dispositif de décalage et la mesure de la position angulaire dudit dispositif de décalage sur chaque intervalle de temps unitaire de la période, puis à sommer lesdites différences sur toute ladite période de la zone de diagnostic, pour comparer ladite somme à une valeur seuil prédéfinie. Le calcul de la différence entre la consigne théorique de la position angulaire et la mesure réelle de ladite position angulaire, s'effectue sur chaque intervalle de temps unitaire de la période donnée, de façon à couvrir toute ladite période. Typiquement, un intervalle de temps unitaire vaut quelques millisecondes.

De façon avantageuse, une défaillance du système de décalage est détectée, lorsque la somme des différences est supérieure ou égale à ladite valeur seuil prédéterminée.

Préférentiellement, les différents calculs de l'étape d'identification de la zone de diagnostic et de l'étape de détection de la défaillance, sont réalisés par une unité centrale de calcul embarquée dans le véhicule.

Selon un autre mode de réalisation préféré d'un procédé selon l'invention, l'étape de détection de la défaillance du dispositif de décalage, s'effectue en prenant en compte au moins deux zones distinctes de diagnostic. En effet, le fait de conduire l'étape de détection de la défaillance du dispositif de décalage sur une seule zone de diagnostic, pourrait s'avérer quelque peu aléatoire. Il peut alors paraitre plus rigoureux d'effectuer cette étape sur plusieurs zones de diagnostic, afin d'étayer le diagnostic de défaillance dudit dispositif avec plusieurs résultats, et donc d'éliminer toute ambigüité au sujet dudit diagnostic.

Les procédés de détection d'une défaillance d'un dispositif de décalage selon l'invention, présentent l'avantage de ne pas impliquer de pièces ou d'équipements supplémentaires et peuvent donc être réalisés sans engendrer un encombrement significatif dans le véhicule. Ils ont de plus l'avantage de proposer un diagnostic sûr, précis et fiable et de restituer l'information au conducteur du véhicule en temps réel.

On donne ci-après une description détaillée d'un mode de réalisation préféré d'un procédé de détection d'une défaillance d'un dispositif de décalage selon l'invention en se référant aux figures 1 à 4 :
- La figure 1 est un synoptique présentant les différentes étapes d'un procédé selon l'invention,
- La figure 2 est un diagramme de la variation angulaire d'un dispositif de décalage au cours du temps, permettant de comparer une consigne de position angulaire et la mesure de la position angulaire correspondante,
- La figure 3 est une vue agrandie d'une zone du diagramme de la figure 2 pour un système de décalage conforme,
- La figure 4 est une vue agrandie d'une zone du diagramme de la figure 2 pour un système de décalage défaillant.

Un procédé selon l'invention est mis en oeuvre automatiquement au moyen d'un calculateur, pouvant par exemple être une unité centrale de calcul d'un véhicule automobile. Toutes les étapes d'un procédé selon l'invention sont conduites systématiquement et automatiquement par ce calculateur, sans que le conducteur dudit véhicule n'ait à intervenir.

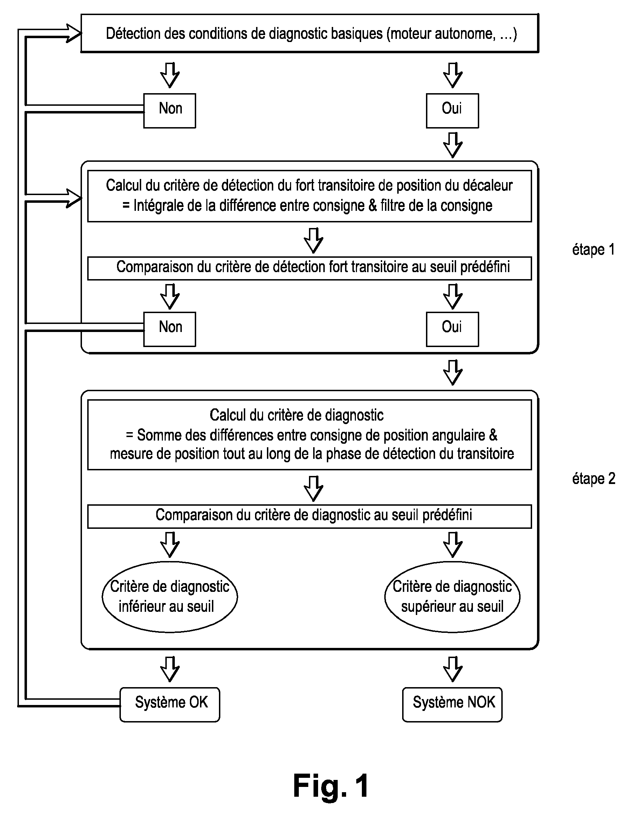

En se référant à la figure 1, un procédé selon l'invention intègre une étape préliminaire consistant à vérifier que le moteur du véhicule est placé dans des conditions standards de fonctionnement. En effet, si le moteur devait fonctionner dans un environnement extrême, par exemple à une température très élevée, les résultats proposés par le procédé selon l'invention, risqueraient de ne pas être fiables, en raison notamment d'une dilatation thermique du dispositif de décalage, qui entraverait artificiellement son fonctionnement et/ou son pilotage.

Ledit procédé comprend une première étape permettant d'identifier au moins une zone de diagnostic potentielle pouvant servir de base à une étape ultérieure de détection d'une défaillance du dispositif de décalage. Cette étape consiste à suivre l'évolution, au cours du temps, de la consigne de position angulaire du dispositif de décalage, et l'évolution, au cours du temps, d'un filtre passe bas d'ordre 1 de cette consigne, et à repérer les phases à fort transitoire. L'échelle des temps est divisée en périodes unitaires, fixées chacune par exemple entre 5s et 10s, et lorsqu'une phase à fort transitoire est repérée, un calcul de la différence entre la consigne de position angulaire du dispositif de décalage et le filtre passe bas d'ordre 1 de ladite consigne est réalisé. Une phase à fort transitoire correspond, par exemple, à un écart angulaire de l'angle vilebrequin de 20° à 30°. En effet, la position angulaire du dispositif de décalage est exprimée en angle vilebrequin.

Cette différence est ensuite intégrée sur une période unitaire. Dans le cas d'un transitoire important de la position angulaire du dispositif de décalage sur un temps suffisamment long, les deux variables utilisées, qui sont représentées par la consigne et le filtre passe bas de cette consigne, divergeront l'une de l'autre.

La valeur de cette intégrale est ensuite comparée à une valeur seuil prédéfinie.
- Si la valeur de cette intégrale est inférieure à cette valeur seuil, la phase de fort transitoire ne peut pas constituer une zone de diagnostic pour détecter une défaillance éventuelle du dispositif de décalage. L'étape d'identification est alors réitérée sur une phase postérieure de fort transitoire.
- Si la valeur est supérieure ou égale à ladite valeur seuil, la phase de fort transitoire représente alors une zone de diagnostic permettant la détection d'une défaillance éventuelle du dispositif de décalage.

Il est important de souligner qu'une zone de diagnostic va se définir par un fort transitoire sur un temps significatif. A titre d'exemple, une telle zone de diagnostic va correspondre à un écart angulaire de l'angle vilebrequin supérieur à 20°, sur une période de 5s à 10s. Ces cas de forts transitoires peuvent se rencontrer sur une forte accélération à bas régime, au cours de laquelle le dispositif de décalage passe par des positions angulaires réellement différentes d'un point de fonctionnement à l'autre et ce, pendant un temps significatif.

Une fois qu'au moins une zone de diagnostic a été identifiée lors de la première étape, le procédé selon l'invention va mettre en oeuvre une deuxième étape de détection d'une éventuelle défaillance du dispositif de décalage. En effet, chaque zone de diagnostic identifiée lors de la première étape va servir de base à ladite deuxième étape. Pour une zone de diagnostic sélectionnée lors de la première étape du procédé, cette deuxième étape consiste à calculer la différence entre la consigne de position angulaire du dispositif de décalage et la mesure de la position angulaire dudit dispositif de décalage pour chaque unité de temps constituant la période unitaire évoquée lors de ladite première étape. En effet, la période unitaire, qui peut par exemple, être égale à 5s ou 10s, est subdivisée en unités de temps pouvant valoir par exemple 10ms, et le calcul de ladite différence s'effectue pour chacune desdites unités de temps.

Toutes ces différences sont ensuite additionnées pour obtenir une somme globale de ces différences sur toute la période unitaire considérée et correspondant à celle de la zone de diagnostic issue de la première étape.

La valeur de cette somme est ensuite comparée à une valeur seuil prédéterminée.
- Si la valeur de cette somme est inférieure à cette valeur seuil, le dispositif de décalage est jugé conforme, et le procédé selon l'invention est relancé pour identifier une nouvelle zone de diagnostic,
- Si la valeur de cette somme est supérieure ou égale à ladite valeur seuil, le dispositif de décalage est considéré comme défaillant.

Afin de renforcer le diagnostic de défaillance du dispositif de décalage, plusieurs zones de diagnostic peuvent être successivement prises en considération, et ledit diagnostic définitif ne sera alors effectif qu'après avoir traité lesdites zones de diagnostic.

La deuxième étape de détection de la défaillance du dispositif de décalage est généralement réalisée par l'unité centrale de calcul simultanément avec la première étape.

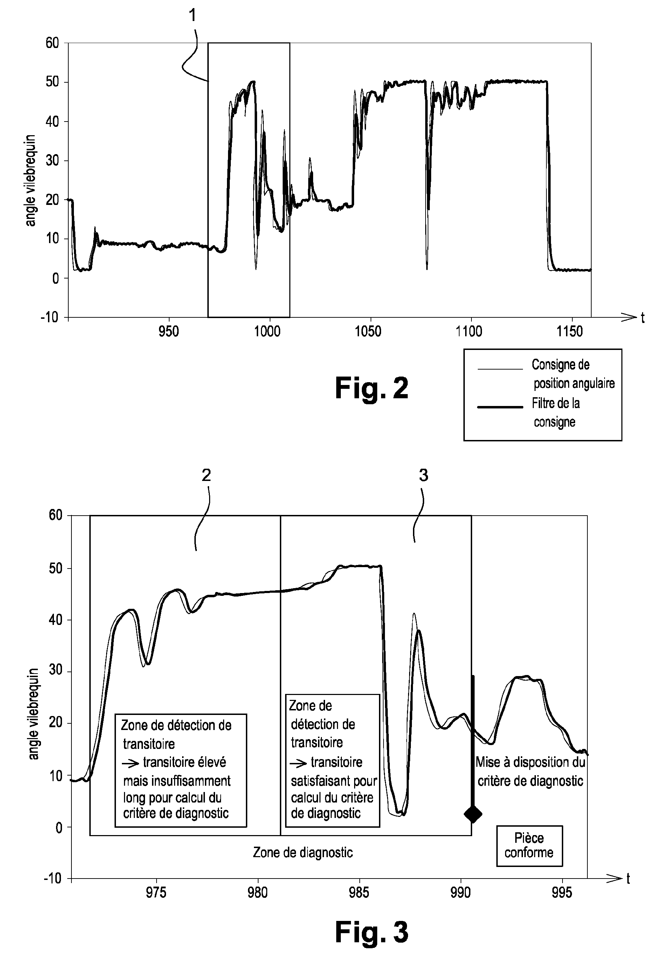

La figure 2 illustre un exemple d'une zone 1 de fort transitoire, qui est une zone dans laquelle la position angulaire du dispositif de décalage varie plusieurs fois avec une forte amplitude, et sur un temps assez long, de l'ordre de 35s. La courbe correspondant à la mesure de la position angulaire du dispositif de décalage, est légèrement décalée vers la droite par rapport à la courbe correspondant à la consigne, traduisant un léger retard de la mesure sur la consigne.

La figure 3 est un premier découpage virtuel en deux sous-zones 2,3 de ce que pourrait constituer une partie de la zone 1 de fort transitoire apparaissant sur le diagramme de la figure 1. Chacune de ces sous-zones s'étale sur 10s. La première 2 de ces deux sous-zones dans le temps, correspond à un transitoire élevé sur un temps insuffisamment long et ne peut donc pas constituer une zone de diagnostic à partir de laquelle pourra être effectuée la détection d'une éventuelle défaillance du système de décalage. En revanche, la deuxième sous-zone 3 dans le temps, correspond à un fort transitoire sur un temps suffisamment long, et peut constituer une zone de diagnostic. Dans cette deuxième sous-zone 3, la mesure de la position angulaire est décalée par rapport à la consigne de ladite position angulaire de façon faible et constante. Le déroulement de la deuxième étape du procédé permettrait de conclure dans ce cas, à partir de cette deuxième sous-zone 3, que le dispositif de décalage est conforme.

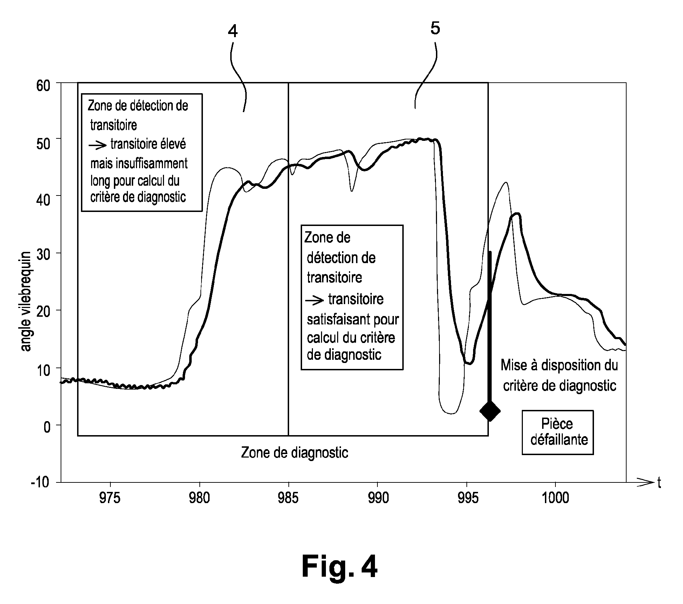

La figure 4 est un deuxième découpage virtuel en deux sous-zones 4,5 de ce que pourrait constituer une partie de la zone 1 de fort transitoire apparaissant sur le diagramme de la figure 1. Chacune de ces sous-zones s'étale sur 10s. La première 4 de ces deux sous-zones dans le temps, correspond à un transitoire élevé sur un temps insuffisamment long et ne peut donc pas constituer une zone de diagnostic, à partir de laquelle pourra être effectuée la deuxième étape de détection d'une éventuelle défaillance du système de décalage. En revanche, la deuxième sous-zone 5 dans le temps correspond à un fort transitoire sur un temps suffisamment long, et peut constituer une zone de diagnostic. Dans cette deuxième sous-zone 5, la mesure de la position angulaire est décalée de façon importante et irrégulière par rapport à la consigne de ladite position angulaire. Le déroulement de la deuxième étape du procédé, permettrait de conclure que le dispositif de décalage est ici défaillant.

## Revendications

1. Procédé de détection d'une défaillance d'un dispositif de décalage d'arbre à cames d'un moteur de véhicule, comprenant :
- Une étape de vérification des conditions standards de fonctionnement du moteur,
- Une étape d'identification d'une zone de diagnostic (3,5) correspondant à une phase de transitoire important sur une période donnée,
- Une étape de détection d'une défaillance du dispositif de décalage dans ladite zone de diagnostic (3,5), ladite étape se fondant sur une comparaison entre la somme des différences entre la consigne de position angulaire du dispositif de décalage et la mesure de la position angulaire dudit dispositif de décalage pendant ladite période, avec une valeur seuil prédéterminée,
ledit procédé étant **caractérisé en ce que** l'étape d'identification de la zone de diagnostic (3,5) se fonde sur la différence entre la consigne de position angulaire du dispositif de décalage et un filtre numérique passe-bas d'ordre 1 de cette consigne, et sur une comparaison d'une caractéristique de ladite phase avec une valeur prédéfinie.

2. Procédé de détection selon la revendication 1, **caractérisé en ce que** l'étape d'identification comprend les étapes suivantes :
- Une étape de calcul de la différence entre la consigne de position angulaire du dispositif de décalage et le filtre numérique passe bas d'ordre 1,
- Une étape d'intégration de cette différence sur la période donnée,
- Une étape de comparaison entre la valeur de l'intégrale calculée et une valeur seuil prédéterminée.

3. Procédé de détection selon la revendication 2, **caractérisé en ce qu'**une zone de diagnostic (3,5) est sélectionnée pour procéder à l'étape de détection, si la valeur de l'intégrale calculée est supérieure ou égale à la valeur seuil prédéfinie.

4. Procédé selon l'une quelconque des revendications 1 à 3, **caractérisé en ce que** la position angulaire du dispositif de décalage est exprimée en angle vilebrequin.

5. Procédé selon la revendication 4, **caractérisé en ce qu'**un transitoire important de position angulaire correspond à un écart angulaire de l'angle vilebrequin compris entre 20° et 40°.

6. Procédé selon l'une quelconque des revendications 4 ou 5, **caractérisé en ce que** la période donnée correspondant à une phase de transitoire élevé est comprise entre 5s et 10s.

7. Procédé selon l'une quelconque des revendications 1 à 6, **caractérisé en ce que** l'étape de détection de la défaillance s'effectue en calculant la différence entre la consigne de position angulaire du dispositif de décalage et la mesure de la position angulaire dudit dispositif de décalage sur chaque intervalle unitaire de temps de la période, puis à sommer lesdites différences sur toute ladite période de la zone de diagnostic (3,5), pour comparer ladite somme à une valeur seuil prédéfinie.

8. Procédé selon la revendication 7, **caractérisé en ce qu'**une défaillance du système de décalage est détectée, lorsque la somme des différences est supérieure ou égale à ladite valeur seuil prédéfinie.

9. Procédé selon l'une quelconque des revendications 1 à 8, **caractérisé en ce que** les différents calculs de l'étape d'identification et de l'étape de détection de la défaillance sont réalisés par une unité centrale de calcul embarquée dans le véhicule.

10. Procédé selon l'une quelconque des revendications 1 à 9, **caractérisé en ce que** l'étape de détection de la défaillance du dispositif de décalage, s'effectue en prenant en compte au moins deux zones distinctes de diagnostic (3,5).

## Patentansprüche

1. Verfahren zur Erfassung einer Fehlfunktion einer Nockenwellenverstelleinrichtung eines Fahrzeugmotors, umfassend:
- einen Schritt der Überprüfung der Standardbetriebsbedingungen des Motors,
- einen Schritt der Identifikation einer Diagnosezone (3, 5) entsprechend einer wichtigen Übergangsphase über einen gegebenen Zeitraum,
- einen Schritt der Erfassung einer Fehlfunktion der Verstelleinrichtung in der Diagnosezone (3, 5), wobei der Schritt auf einem Vergleich der Summe der Differenzen zwischen dem Winkelpositionssollwert der Verstelleinrichtung und der Messung der Winkelposition der Verstelleinrichtung während des Zeitraums mit einem vorbestimmten Schwellenwert basiert,
wobei das Verfahren **dadurch gekennzeichnet ist, dass** der Schritt der Identifikation der Diagnosezone (3, 5) auf der Differenz zwischen dem Winkelpositionssollwert der Verstelleinrichtung und einem digitalen Tiefpassfilter erster Ordnung dieses Sollwerts und auf einem Vergleich eines Merkmals der Phase mit einem vordefinierten Wert basiert.

2. Erfassungsverfahren nach Anspruch 1, **dadurch gekennzeichnet, dass** der Identifikationsschritt die folgenden Schritte umfasst:
- einen Schritt der Berechnung der Differenz zwischen dem Winkelpositionssollwert der Verstelleinrichtung und dem digitalen Tiefpassfilter erster Ordnung,
- einen Schritt der Integration dieser Differenz über den gegebenen Zeitraum,
- einen Schritt des Vergleichs zwischen dem Wert des berechneten Integrals und einem vorbestimmten Schwellenwert.

3. Erfassungsverfahren nach Anspruch 2, **dadurch gekennzeichnet, dass** eine Diagnosezone (3, 5) ausgewählt wird, um den Erfassungsschritt vorzunehmen, wenn der Wert des berechneten Integrals größer oder gleich dem vordefinierten Schwellenwert ist.

4. Verfahren nach einem der Ansprüche 1 bis 3, **dadurch gekennzeichnet, dass** die Winkelposition der Verstelleinrichtung in Kurbelwellenwinkel ausgedrückt ist.

5. Verfahren nach Anspruch 4, **dadurch gekennzeichnet, dass** ein wichtiger Winkelpositionsübergang einem Winkelversatz des Kurbelwellenwinkels zwischen 20° und 40° entspricht.

6. Verfahren nach einem der Ansprüche 4 oder 5, **dadurch gekennzeichnet, dass** der gegebene Zeitraum, der einer hohen Übergangsphase entspricht, zwischen 5s und 10s liegt.

7. Verfahren nach einem der Ansprüche 1 bis 6, **dadurch gekennzeichnet, dass** der Schritt der Erfassung der Fehlfunktion durch Berechnung der Differenz zwischen dem Winkelpositionssollwert der Verstelleinrichtung und der Messung der Winkelposition der Verstelleinrichtung über jedes Einheitszeitintervall des Zeitraums und dann Summierung der Differenzen über den gesamten Zeitraum der Diagnosezone (3, 5), um die Summe mit einem vordefinierten Schwellenwert zu vergleichen, entspricht.

8. Verfahren nach Anspruch 7, **dadurch gekennzeichnet, dass** eine Fehlfunktion des Verstellsystems erfasst wird, wenn die Summe der Differenzen größer oder gleich dem vordefinierten Schwellenwert ist.

9. Verfahren nach einem der Ansprüche 1 bis 8, **dadurch gekennzeichnet, dass** die verschiedenen Berechnungen des Identifikationsschrittes und des Erfassungsschrittes der Fehlfunktion durch eine zentrale Recheneinheit, die in das Fahrzeug eingebaut ist, erfolgen.

10. Verfahren nach einem der Ansprüche 1 bis 9, **dadurch gekennzeichnet, dass** der Schritt der Erfassung der Fehlfunktion der Verstelleinrichtung unter Berücksichtigung mindestens zweier getrennter Diagnosezonen (3, 5) erfolgt.

## Claims

1. Method for detecting a malfunction of a vehicle engine camshaft offset device, comprising the following steps,
- a step of verification of the standard operating conditions of the engine,
- a step of identification of a diagnosis area (3, 5) corresponding to an important transient phase over a given period,
- a step of detection of a malfunction of the offset device in said diagnosis area (3, 5), said step being based on a comparison between the sum of the differences between the angular position setpoint of the offset device and the measurement of the angular position of said offset device during said period, with a predetermined threshold value,
said method being **characterized in that** the step of identification of the diagnosis area (3, 5) is based on the difference between the angular position setpoint of the offset device and a digital first-order low-pass filter for this setpoint, and on a comparison of a characteristic of said phase with a predefined threshold value.

2. Detection method according to Claim 1, **characterized in that** the identification step comprises the following steps:
- a step of calculation of the difference between the angular position setpoint of the offset device and the digital first-order low-pass filter,
- a step of integration of this difference over the given period,
- a step of comparison between the calculated integral value and a predetermined threshold value.

3. Detection method according to Claim 2, **characterized in that** a diagnosis area (3, 5) is selected to proceed to the detection step if the calculated integral value is greater than or equal to the predefined threshold value.

4. Method according to any one of Claims 1 to 3, **characterized in that** the angular position of the offset device is expressed as a crankshaft angle.

5. Method according to Claim 4, **characterized in that** an important angular position transient corresponds to a crankshaft angle angular deviation between 20° and 40°.

6. Method according to either one of Claims 4 and 5, **characterized in that** the given period corresponding to a high transient phase is between 5 s and 10 s.

7. Method according to any one of Claims 1 to 6, **characterized in that** the step of detection of the malfunction is effected by calculating the difference between the angular position setpoint of the offset device and the measurement of the angular position of said offset device over each unit time interval of the period, and then summing said differences over the whole of said period of the diagnosis area (3, 5), to compare said sum to a predefined threshold value.

8. Method according to Claim 7, **characterized in that** a malfunction of the offset system is detected if the sum of the differences is greater than or equal to said predefined threshold value.

9. Method according to any one of Claims 1 to 8, **characterized in that** the various calculations of the identification step and the step of detection of the malfunction are carried out by a central processor unit onboard the vehicle.

10. Method according to any one of Claims 1 to 9, **characterized in that** the step of detection of the malfunction of the offset device is effected taking into account at least two different diagnosis areas (3, 5).
